# EUROPEAN PATENT APPLICATION

(11) **EP 2 123 908 A1**
(43) Date of publication of application: **25.11.2009**
(21) Application number: 06841805.2
(22) Date of filing: 22.12.2006
(51) Int. Cl.: F03D 9/00, H02K 17/42, H02M 5/45

(54) **ASYNCHRONOUS GENERATOR WITH DOUBLE SUPPLY**

(71) Applicant: Wind To Power System, S.l., 28108 Madrid (ES)
(72) Inventor: CORCELLES PEREIRA, José Manuel, E-28108 Madrid (ES); ARNALTES GÓMEZ, Santiago, E-28108 Madrid (ES); SANTOS MARTÍN, David, E-28108 Madrid (ES); RODRÍGUEZ AMENEDO, José Luis, E-28108 Madrid (ES)
(74) Representative: ABG Patentes, S.L.
(86) International application number: PCT/ES2006/070199
(87) International publication number: WO 2008/077974

(57) **Abstract**

Doubly fed asynchronous generator wherein the stator of the generator is connected to an electric power grid through a first end of a first winding of a transformer, with the electric power grid connected to the second end of the first winding, whereas the rotor is connected to a first converter of which the output is connected through a direct current network to a second converter which has an output connected to a second winding of the transformer. The configuration described contributes to the stability of the mains network by providing reactive power and reducing consumption of active power, also enables dynamic exchange of reactive power with the mains network and makes connecting with a low wind speed a viable option.

## Description

### OBJECT OF THE INVENTION

The present invention relates, in general, to an asynchronous, or induction, doubly fed generator that can be connected to a turbine, such as a wind turbine, to generate electric power that is injected into the electric power grid.

### BACKGROUND OF THE INVENTION

At present, generators connected to variable-speed wind turbines are used to produce electric power that reaches end consumers through the three-phase electric power grid.

A generator connected to a variable-speed turbine to generate and supply electric power to the three-phase electric power grid is disclosed in US Patent 6,137,187, Mikhail et al., wherein the stator of the generator is connected directly to the electric power grid and the rotor thereof is in turn connected to the same grid via a first AC/DC converter that is in turn connected in cascade to a second DC/AC converter, the output of which is connected to the three-phase AC power grid. Both the first and second converters are two inverters respectively.

The system disclosed in said document US 6,137,187 also comprises an electromagnetic torque controller and a blade pitch angle controller. The electromagnetic torque controller uses a solution based on the electric field orientation. The blade pitch angle controller performs a regulation which is based on the rotor speed of the generator, being independent of the electromagnetic torque controller.

However, the doubly fed asynchronous generator system that is disclosed in said patent presents certain drawbacks deriving, for example, from the direct connection of the generator's stator to the three-phase electric power grid, such as the generator's high core losses.

As well, said direct electrical connection does not guarantee the continuity of the connection of the doubly fed asynchronous generator to the electric power grid when there are significant variations in voltage therein as a consequence of: connections or disconnections of electric loads, balanced and unbalanced short circuits for a certain period of time or similar situations.

Furthermore, when the doubly fed asynchronous generator is connected to a wind turbine, the system thus formed cannot be connected to the electric power grid when the wind speed is low.

The doubly fed asynchronous generator presents an inefficient control of reactive power when a low level of real power is injected into the three-phase electric power grid.

It is therefore necessary to develop a generator that can be connected to a turbine to generate and supply electric power to an electric power grid that is capable of recovering rotor energy from an asynchronous, or induction, machine by means of a series connection with an electric power grid, which avoids the above-described problems.

### DESCRIPTION OF THE INVENTION

The present invention seeks to overcome or reduce one or more of the drawbacks explained above by means of a generator that can be connected to a turbine, such as a variable-speed wind turbine, as claimed in claim 1. Embodiments of the invention are established in the dependent claims.

One object of the invention is that the stator of the generator is connected in series to an electric power grid by means of a first coil of a transformer. The voltage applied to this coil is controlled by an electronic converter, which consequently controls the voltage level of the generator's stator. This makes it possible to increase the overall performance of the electric generator, as core losses are reduced when a low voltage is applied to the stator of the generator.

Another object of the invention is that the rotor of the doubly fed asynchronous generator is connected to the same grid by a first electric power converter that is connected by a DC link to a second electric power converter, which in turn is connected to a second coil of the series transformer, so that the supply line thus formed allows a two-way flow of electric power between the rotor of the generator and the electric power grid.

Another further object of the invention is to guarantee the electric power supply when there are voltage variations in the electric power grid in balanced and unbalanced operation of the generator, helping to ensure the stability of the grid by supplying reactive power and reducing the consumption of real power.

Another object of the invention is that the generator is capable of dynamically exchanging reactive power with the grid, regardless of the level of load thereof.

Another further object of the invention is that the generator is capable of generating a voltage at its output when the electric power grid is not available due to a prior contingency.

Another object of the invention is that the generator coupled to a wind turbine can be connected to the grid when there is a low wind speed. Under these conditions, the speed of rotation of the generator would be practically null and the voltage of the stator would be low. It would therefore be possible to make use of locations with low wind power that are currently ruled out because there are no systems capable of optimising the performance of the aerogenerator in these operating conditions.

### BRIEF DESCRIPTION OF THE FIGURES

A more detailed explanation of the invention is given in the following description based on the attached figures in which:
- Figure 1: shows a block diagram of an aerogenerator according to the invention, and
- Figure 2: shows a vector diagram of the currents and voltages associated with the operation of the generator according to the invention.

### DETAILED DESCRIPTION OF A PREFERRED EMBODIMENT OF THE INVENTION

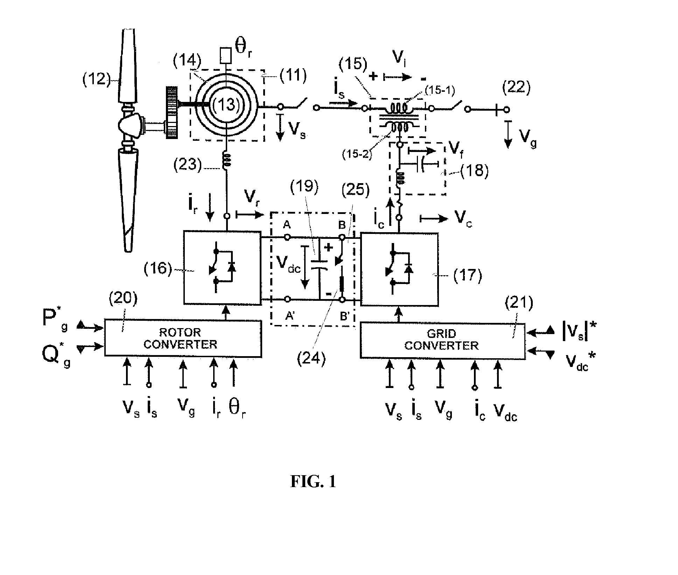

With reference to Figure 1, a block diagram of a doubly fed asynchronous, or induction, generator is shown below together with the necessary means of control for its correct operation.

The doubly fed asynchronous generator 11 can be connected to a turbine 12, such as a variable-speed wind turbine, so that said turbine is coupled to the rotor 13 that turns inside a stator 14 of the generator 11.

The stator 14 is connected in series to a first end of a first coil 15-1 of a transformer 15, so that an electric power grid 22 is connected to the second end of the first 15-1 coil of the transformer 15.

The rotor 13 is connected to an input of a first electric energy converter 16, the output of which is connected in cascade by a direct current connection to an input of a second electric energy converter 17, which has an output that is connected to a second coil 15-2 of the transformer via a filter 18.

There is a capacitor 19 connected to the direct current link, which stores electric power according to the real power exchanged between the first 16 and second 17 converters.

Likewise, there is a resistance 24 connected to the direct current link, which is controlled by a switch 25 to ensure that the maximum voltage levels of the direct current link are not exceeded in the different operating modes.

It should be observed that the first electric power converter 16 transforms a variable-frequency alternating current that is generated by the rotor 13 of the generator into direct current, and subsequently, the second converter 17 in turn transforms the direct current from the DC link into constant-frequency alternating current. Thus, a fraction of the total power injected by the generator 11 is transferred between the rotor 13 of the generator and the grid 22.

In another operating mode of the generator 11, the grid 22 can supply electric power to the generator 11 via the second 17 and first 16 electric power converters. Consequently, electric power can flow in a two-way mode along the connection line between the rotor 13 and the grid 22.

The total electric power output of the generator 11 is combined in the transformer 15.

The first converter 16 comprises a set of switching elements so that each of them has a control terminal through which an on and/or off signal is applied to them.

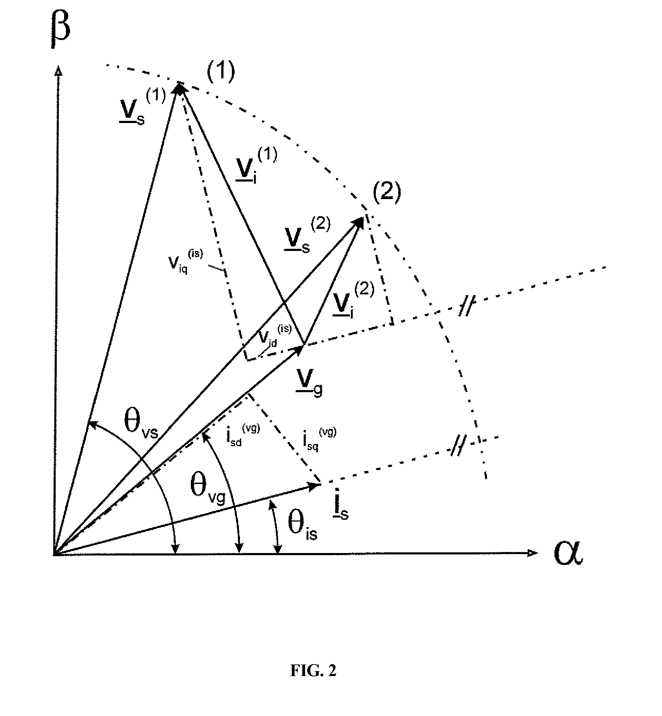

With reference to figures 1 and 2, a first controller module 20 generates and supplies said switching signals, and to carry out said tasks the first controller 20 calculates and/or receives a signal that is proportional to the current of the rotor iᵣ, a signal that is proportional to the current of the stator iₛ, a signal that is proportional to the voltage of the stator Vₛ, a signal that is proportional to the voltage of the electric power grid, V_{g}, and a signal that is proportional to the position angle of the rotor, θᵣ, to control the total real power, Pg, and reactive power, Qg, that is injected into the grid 22.

The first controller 20 comprises a first microprocessor that stores a control algorithm, such as vector control, direct control or the like, with which it regulates the current of the stator 14 so that it governs the real and reactive power injected into the electric power grid 22, and the electromagnetic torque of the generator 11 and the reactive power supplied by the stator 14 of the generator to the grid 22.

Similarly, the second converter 17 also comprises a set of switching elements so that each of them has a control terminal through which an on or off signal is applied to them.

A second controller 21 module generates and supplies said on and/or off signals, and to carry out said tasks the second controller 21 calculates and/or receives a signal that is proportional to the output current of the second 17 converter, i_{c}, a signal that is proportional to the DC bus voltage, V_{dc}, a signal that is proportional to the grid 22 voltage, V_{g}, a signal that is proportional to the current of the stator 14, is, and a signal that is proportional to the voltage of the stator 14 current, Vₛ.

The second controller 21 stores an algorithm with which it regulates the voltage applied to the capacitor 19 of the DC bus following a control strategy that marks its reference value V*_{dc}.

Likewise, the second controller 21 also includes a second microprocessor that stores an algorithm with which it regulates the module of the resulting voltage applied to the stator 14 of the generator following a control strategy that marks its reference value |V*ₛ|.

Consequently, both the first 20 and second 21 controllers govern the first 16 and second 17 converters, respectively, so that they control the process of: the resulting voltage applied to the stator 14 of the generator, the conversion of the total power generated by the rotor 13 and the stator 14 of the generator 11.

The means of governing the resulting voltage applied to the stator 14 is based on controlling the voltage injected from the second converter 17 into the electricity grid 22 via the transformer 15.

The first controller 20 is responsible for regulating the electromagnetic torque and the reactive power exchanged by the stator 14 with the grid 22 and/or the total real and reactive electrical power injected into the same grid 22.

The second controller 21 is responsible for regulating the DC voltage V_{dc} in the capacitor 19, at a constant reference value V*_{dc}, so that the rotor instantly transfers power to the grid 22.

The second controller 21 is also responsible for regulating the applied voltage and/or resulting voltage applied to the stator 14 of the generator, |V*ₛ|, as the voltage, Vᵢ, of the second converter 17 is vectorially added to the voltage, V_{g}, of the grid 22.

With reference to Figure 2, which shows stationary axes α-β on which the spatial vectors of the stator 14 voltage Vₛ, grid 22 voltage V_{g}, voltage Vᵢ, induced into the first coil 15-1 of the transformer 15 as a consequence of the control over the second 17 converter, and stator 14 current iₛ are shown, the principle of control that makes it possible to regulate the power of the rotor that is injected into the grid 22 and the voltage applied to the stator 14 of the generator 11 is illustrated.
Suppose, for the moment, that the grid 22 voltage V_{g} is constant in terms of its RMS value and frequency. For certain particular operating conditions of the generator 11, in relation to the real and reactive power injected into the grid 22, the current of the generator 11, iₛ, will be determined in terms of magnitude and angle in relation to the grid 22 voltage V_{g}.

The projection of iₛ over V_{g}, i_{sd}, determines the value of the real power injected into the grid 22, and the transversal component, i_{sq}, determines the value of the reactive power. On the other hand, to recover rotor power it is required to generate a voltage Vᵢ, that is induced into the first coil 15-1 of the transformer 15 in phase with the current of the stator, V_{id}, the voltage applied to the stator 14 of the generator 11, Vₛ, being the sum of the grid 22 voltage V_{g} plus the voltage Vᵢ. It would thus be possible to achieve a variable voltage, V_{g}, according to the voltage value Vᵢ, induced in the first coil 15-1 of the transformer 15 that is required for the recovery of rotor power.

The manner of regulating the module of the voltage Vₛ applied to the stator 14 of the generator 11, |Vₛ|, consists of applying a voltage V_{iq} in quadrature with the previous voltage V_{id} so that the module of the resulting voltage Vₛ is kept constant, regardless of the point of operation of the generator 11.

It should be observed that the application of this voltage V_{iq} in quadrature with the current of the generator 11, iₛ, does not affect the value of the real power that is injected by the second converter 17 into the grid 22, which permits a decoupled control of said power, which must be the same as the power of the rotor 13 at all times, and the voltage applied to the stator 14.

Likewise, it should also be observed that the present invention can be implemented on a variety of computers that include microprocessors, a computer-readable storage medium, which includes volatile and non-volatile memory and/or storage devices. The logic of the computing hardware that cooperates with different sets of instructions is applied to the data to perform the above-described functions and to generate output information. The programs used by the computing hardware that is taken as an example can preferably be implemented in different programming languages, including a high-level programming language that is designed for procedures or objects to communicate with a computer system. Each computer program is preferably stored in a computer-readable storage medium or device (e.g. ROM or magnetic disc) that can be read by programmed computer for general or special use to configure and operate the computer when the storage medium or device is read by the computer in order to execute the above-described procedures. Likewise, it can also be considered that the first and second controllers are implemented as a computer-readable storage medium, configured with a computer program, wherein the storage medium thus configured makes the computer work in a specific, pre-defined manner.

The embodiments and examples established in this specification are presented as the best explanation of the present invention and its practical application to thus enable a person skilled in the art to use the invention. However, a person skilled in the art will recognise that the foregoing description and examples have been presented with the intention of illustrating just one example. The description, as it is set out, is not intended to be exhaustive or to limit the invention to the precise form that is described. Many modifications and variations are possible in view of the aforementioned teaching whilst adhering to the spirit and scope of the following claims.

## Claims

1. Doubly fed asynchronous generator for generating electric power, **characterised in that** a stator (14) is connected in series to a first end of a first coil (15-1) of a transformer (15), and an electric power grid (22) is connected to the second end of the first (15-1) coil of the transformer (15).

2. Generator according to claim 1, **characterised in that** a rotor (13) is connected to an input of a first (16) electric power converter, the output of which is connected by a DC connection to an input of a second (17) electric power converter, which has an output that is connected to a second (15-2) coil of the transformer (15).

3. Generator according to claim 2, **characterised in that** the rotor (13) is connected to the input of a first electric power converter (16) via an inductor (23).

4. Generator according to claim 2 or 3, **characterised in that** the second (15-2) coil is connected to the transformer (15) via a filter (18).

5. Generator according to claim 4, **characterised in that** a capacitor (19) stores electric power when there is a two-way flow of power between the first (16) and second (17) converters.

6. Generator according to claim 5, **characterised in that** the first converter(16) comprises a set of switching elements, wherein each of them has a terminal through which an on and/or off control signal, respectively, is applied to them.

7. Generator according to claim 6, **characterised in that** a first controller(20) module generates the on and/or off signals to apply them to the switching elements of the first converter(16) in order to regulate the current of the stator (14) to control the real and reactive power injected into the electric power grid (22), and to control the electromagnetic torque of the generator (11) and the reactive power supplied by the stator (14) of the generator to the grid 22.

8. Generator according to claim 7, **characterised in that** the second converter(17) comprises a set of switching elements, wherein each of them has a terminal through which an on and/or off control signal, respectively, is applied to them.

9. Generator according to claim 8, **characterised in that** a second controller(21) generates the on and/or off signals to apply them to the switching elements of the second converter(17) so that it regulates the reference voltage of the capacitor (19) of the DC link and the resulting voltage or that applied to the stator (14) so that rotor power is instantly transferred to the grid (22).

10. Generator according to claim 9, **characterised in that** the generator (11) is connected to a turbine (12).

11. Generator according to claim 10, **characterised in that** the turbine (12) is a wind turbine.

12. Method of controlling the electric power generated by a generator according to claim 1, **characterised in that** it comprises the step of regulating the current of the stator (14) to governs the real and reactive power injected into the electric power grid (22).

13. Method according to claim 12, **characterised in that** it comprises the step of regulating the electromagnetic torque of the generator (11) and the reactive power supplied by the stator (14) of the generator to the electric power grid (22).

14. Method according to claim 13, **characterised in that** it also comprises the step of regulating the voltage applied to the capacitor (19) of the DC bus on the basis of controlling a pre-determined reference value (V*dc) so that power is dynamically transferred from the rotor (13) to the grid (22).

15. Method according to claim 14, **characterised in that** it also comprises the step of regulating the applied voltage and/or resulting voltage applied to the stator (14) of the generator (11), as the voltage of the second converter(17) is vectorially added to the grid (22) voltage.

16. A computer-readable medium with computer-readable instructions that are configured so that a computer can execute the method according to claims 12 to 15.
